# EUROPÄISCHE PATENTSCHRIFT

(11) **EP 2 537 448 B1**
(45) Veröffentlichungstag und Bekanntmachung des Hinweises auf die Patenterteilung: **05.10.2016**
(21) Anmeldenummer: 12184891.5
(22) Anmeldetag: 12.08.2010
(51) Int. Cl.: A47J 27/58

(54) **Kochgefäßaufsatz zum Verhüten des Überkochens von Flüssigkeiten**
Cooking container attachment for preventing liquids from being overcooked
Couvercle de récipient de cuisson pour éviter le débordement de liquides

(30) Priorität: 17.09.2009 DE 102009041866
(43) Veröffentlichungstag der Anmeldung: 26.12.2012
(62) Teilanmeldung aus: 10008402.9
(73) Patentinhaber: Harecker, Armin, 84424 Isen (DE)
(72) Erfinder: Harecker, Armin, 84424 Isen (DE)
(74) Vertreter: Hoffmann Eitle

(56) Entgegenhaltungen:
- WO-A1-2007/052889
- FR-A- 737 478
- US-A- 5 927 183
- US-A- 6 125 842
- US-A1- 2007 045 304

## Beschreibung

Die Erfindung betrifft einen Kochgefäßaufsatz nach dem Oberbegriff des Patentanspruchs 1. Ein Kochgefäßaufsatz ist aus der FR 737 478 A bekannt.

Gemäß dem DE-GM 8713234 ist ein Kochgefäßaufsatz schalenförmig ausgebildet und kann auf Kochgefäße mit unterschiedlichen Durchmessern aufgelegt werden. Ein Überkochen der Kochflüssigkeit wird dadurch verhindert, dass der Kochgefäßaufsatz zumindest einen relativ großen Durchtrittsöffnungsquerschnitt für die aufschäumende Kochflüssigkeit aufweist. Die Durchtrittsöffnungen sind derart ausgerichtet und ausgebildet ist, dass die Kochflüssigkeit in eine Drehbewegung versetzt wird und somit ein schnelleres Abkühlen der Kochflüssigkeit erreicht wird. Dann fließt die abgekühlte Kochflüssigkeit wieder in das Kochgefäß zurück.

Um ein Anheben des gesamten, offensichtlich aus Metall gebildeten Kochgefäßaufsatzes beim plötzlichen und kraftvollen Hochkochen von Kochflüssigkeiten wie bspw. Milch zu vermeiden, muss der freie Öffnungsquerschnitt der Durchtrittsöffnung bzw. der Durchtrittsöffnungen selbst bei hohem Gewicht des Aufsatzes sehr groß sein. Je grösser der Querschnitt der Durchtrittsöffnungen ist, desto zuverlässiger funktioniert der Kochgefäßaufsatz. Durch diese große Durchtrittsöffnung entweicht jedoch nutzlos ein hoher Anteil an Heizenergie während des gesamten Kochvorganges. Weiter führen schon geringste Unebenheiten am oberen Auflagerand des Kochgefäßes oder ein nicht exakt in einer Ebene liegender Auflagerand des Kochgefäßes zum Flüssigkeits- bzw. Schaumaustritt zwischen dem Kochgefäß und dem Kochgefäßaufsatz.

Der Erfindung liegt daher die Aufgabe zugrunde, einen Kochgefäßaufsatz der eingangs genannten Art zu schaffen, der noch zuverlässiger den Austritt von hochkochender bzw. hochschäumender Flüssigkeit bei unterschiedlichen Kochgefäßen verhindert und dabei einen energiesparenden Kochvorgang gewährleistet.

Dies wird durch den Kochgefäßaufsatz nach dem Anspruch 1 erreicht. Vorteilhafte Weiterbildungen sind aus den weiteren Ansprüchen entnehmbar. Die vorteilhaften Wirkungen des erfindungsgemäßen Kochgefäßaufsatzes werden dadurch unterstützt, dass zumindest die Kontaktflächen des Kochgefäßaufsatzes zu den unterschiedlichen Kochgefäßen aus einem elastischen Material, insbesondere aus Silikon gebildet sind, dass der Durchtrittsöffnung bzw. den Durchtrittsöffnungen ein einziges flächiges Verschlussteil zugeordnet ist, das mit dem Kochgefäßaufsatz verbunden ist, im nicht durch die hochkochende bzw. hochschäumende Flüssigkeit in Kontakt stehenden Ruhezustand die ihm zugeordnete Durchtrittsöffnung bzw. die ihm zugeordneten Durchtrittsöffnungen im Wesentlichen verschließt und durch die Beaufschlagung mit der beim Kontakt mit der hochkochenden bzw. hochschäumenden Flüssigkeit entstehenden Öffnungskraft in eine Öffnungsstellung bewegbar ist, in der die Durchtrittsöffnung bzw. Durchtrittsöffnungen zumindest teilweise freigegeben sind, und so gestaltet und mit dem Kochgefäßaufsatz verbunden ist, dass es einen geringen Widerstand der Öffnungsbewegung entgegensetzt.

Während des Kochvorganges ist die Durchtrittsöffnung bzw. sind die Durchtrittsöffnungen geschlossen, womit der Kochgefäßaufsatz wie ein geschlossener, energiesparender Deckel wirkt. Exakt beim Hochkochen der Flüssigkeit, also wenn die hochkochende Flüssigkeit in Kontakt mit dem Verschlussteil gelangt, entfaltet der Kochgefäßaufsatz seine Funktion als Überkochverhinderer, indem die hochkochende Flüssigkeit bzw. der hochkochende Schaum das jeweilige Verschlussteil in die Öffnungsstellung drückt. Dies erfolgt rasch und unter Überwindung des der Öffnungsbewegung entgegenstehenden Widerstandes des flächigen Verschlussteils.

Leicht erkennbar entspricht dieser Widerstand vorrangig der Eigengewichtskomponente und zweitrangig noch einer möglichen Verformungskomponente des Verschlussteils. Ebenso ist somit erkennbar, dass das Verschlussteil möglichst geringgewichtig sein muss und leichtbeweglich verbunden sein muss um ein schnelles und zuverlässiges Öffnen und Schließen des Verschlussteils zu gewährleisten.

Durch die geöffnete Durchtrittsöffnung gelangt somit die hochkochende Flüssigkeit in die Schale, wo ein Energieabbau sowie eine Abkühlung der hochkochenden Flüssigkeit und deren Rückfluss durch die geöffnete Durchtrittsöffnung erfolgen.

Beim erfindungsgemäßen Kochgefäßaufsatz geht also bis zum Erreichen des Siedepunktes der Kochflüssigkeit keine Heizenergie verloren. Erst beim gefährlichen Hochkochen der Flüssigkeit öffnet sich das Verschlussteil entgegen der genannten Widerstandskraft durch die Kraftbeaufschlagung der hochkochenden Flüssigkeit. Durch die flächige, geringgewichtige und mit dem Kochgefäßaufsatz leichtbeweglich verbundene Verschlussteilkonstruktion wird erreicht, dass deren Öffnungswiderstand sehr gering ist und damit auch schon eine geringe, nach oben gerichtete Kraftkomponente der aufkochenden bzw. aufschäumenden Kochflüssigkeit das Verschlussteil in die Öffnungsstellung bringt.

Bedeutend ist hierbei, dass sich das Verschlussteil selbsttätig nur so weit wie nötig öffnet. Je höher der von unten ausgeübte Druck ist, je weiter öffnet das Verschlussteil die Durchtrittsöffnung. Die Durchtrittsöffnungen selbst kann also ohne Energieverlust zu verursachen relativ groß gewählt werden. Damit zusammenhängend kann auch das Gesamtgewicht des Kochgefäßaufsatzes dank des sensibel reagierenden Verschlussteils deutlich reduziert werden, da sich dieses Gesamtgewicht nicht gegen eine feste Kraftkomponente der aufkochenden bzw. aufschäumenden Kochflüssigkeit stemmen muss. Vielmehr bestimmt die aufkochende Flüssigkeit selbst, wie weit das Verschlussteil geöffnet wird, bzw. welcher Öffnungsquerschnitt frei gegeben wird.

Die Öffnungsweite des Verschlussteils ändert sich ständig während des Aufkochvorganges als Reaktion auf die dort gerade wirkende Kraft der aufkochenden bzw. aufschäumenden Flüssigkeit. Diese Änderung der Öffnungsweite, die bis zu einem Flattern des Verschlussteils führen kann, hat den Effekt, dass die Oberflächenspannung der aufschäumenden bzw. hochkochenden Flüssigkeit reduziert wird und damit ein Abbau der nach oben drückenden Kraftkomponente der Flüssigkeit während des Hochkochens erfolgt.

Dabei genügt eine zentrale Durchtrittsöffnung. Es können jedoch auch mehrere Durchtrittsöffnungen vorgesehen sein. Sie müssen nur innerhalb der Öffnungsweite des kleinsten verwendeten Kochgefäßes liegen, die üblicherweise 14 cm beträgt. Diese zentrale Durchtrittsöffnung oder die mehreren Durchtrittsöffnungen werden von nur einem einzigen Verschlussteil verschlossen bzw. geöffnet.

Um den Kochgefäßaufsatz für Kochgefäße mit unterschiedlichen Innendurchmessern, z.B. von 14 cm bis 24 cm, und unterschiedlichen Oberrandausbildungen verwenden zu können sieht die Erfindung zumindest an den Kontaktflächen des Kochgefäßaufsatzes zu den unterschiedlichen Kochgefäßen, beispielsweise in den Ringbereichen von 14 cm, 16 cm, 18 cm, 20 cm, 22 cm, und 24 cm, ein elastisches Material, insbesondere Silikon vor. Damit ist auch gewährleistet, dass es zu keinem Flüssigkeits- oder Schaumaustritt zwischen dem Kochgefäßaufsatz und den unterschiedlichen Kochgefäßen kommt.

Die Ausbildungen des Kochgefäßaufsatzes nach dem Anspruch 1 gewährleisten eine höhere Funktionssicherheit, gewährleistet die Verwendbarkeit bei einem größeren Spektrum an unterschiedlichen Kochgefäßen und bewirkt, dass keine unnötige Energie während es Kochvorganges verloren geht.

Vorteilhafte Ausgestaltungen des Kochgefäßaufsatzes nach dem Hauptanspruch sind in den Unteransprüchen angegeben. Bei einer Ausbildung sind die Durchtrittsöffnungen in einem Kreisringbereich angeordnet. Dies führt zu einer symmetrischen Belastung des Kochgefäßaufsatzes während des Hochkochens der Flüssigkeit und zu einer einfachen Verschlussteilgestaltung. Hier bietet sich beispielsweise ein zentral mit dem Kochgefäßaufsatz verbundenes, tellerartiges Verschlussteil an, das auch in einzelne blütenblätterähnliche Einzelverschlussteile aufgefächert sein kann.

Die folgende Ausbildung ist besonders leicht herstellbar. Sie eignet sich besonders für den Fall, dass der Hauptschalenkörper aus Glas oder Metall gebildet wird. Beispielsweise wäre hier ein Verschlussteller angezeigt, der neben der Durchtrittsöffnung an dem Kochgefäßaufsatz an zwei gegenüberliegenden Punkten befestigt ist und mit beiden Hälften nach oben klappen kann. Es sind jedoch hier, ebenso wie bei den anderen Anordnungen der Durchtrittsöffnungen, viele Möglichkeiten der Verschlussteilausbildung gegeben, soweit sie die im Anspruch 1 genannten Bedingungen erfüllen. Das flächige Verschlussteil ist mit dem Kochgefäßaufsatz so verbunden, dass es eine geführte vertikale Bewegung ausführen kann.

Grundsätzlich kann das Verschlussteil so mit dem Kochgefäßaufsatz verbunden sein, dass es sich radial nach außen oder innen, oder tangential oder zu jeder beliebigen Zwischenrichtung hin öffnen.

Das Verschlussteil kann zumindest bereichsweise aus elastischem Material hergestellt sein. Damit lässt sich gut das Bewegungsverhalten des Verschlussteils bestimmen. Ein elastischer Bereich kann beispielsweise ein elastisches Gelenk bilden, das auch als Filmscharnier ausgebildet sein kann.

Die Ausgestaltung nach Anspruch 8 und 9 ermöglicht eine feine Abstimmung des Verschlussteils in Hinblick auf dessen Öffnungswiderstandes bzw. dessen Beweglichkeit und Sensibilität für die Bewegungen.

Mit der Ausbildung nach dem Anspruch 9, bei der die Dicke des Verschlussteils bevorzugt zu seinen freien, nicht mit dem Kochgefäßaufsatz verbundenen Rändern hin abnimmt wird erreicht, dass sich benachbarte Verschlussteile bei Ihrem Bewegungsweg zwischen der Ruhe- und Öffnungsstellung nicht gegenseitig Verklemmen sondern übereinander gleitbar sind. Der Anspruch 12 betrifft eine bevorzugte Ausbildung des Verschlussteils, die sich u.a. gut zur Verwendung bei der Kochgefäßaufsatzgestaltung nach dem Anspruch 14 eignet. Die Verschlussteile lassen sich einfach im Zentralbereich mit dem Kochgefäßaufsatz verbinden. Damit muss sich der anschließende Verschlussteilring lediglich um sehr kleine, am Zentralbereich Verbindungslinien verformen, wobei der Zentralbereichrand vorzugsweise als Polygonring ausgebildet ist.

Im Anspruch 11 sind Mittel angegeben, mit denen die Steifigkeit des Kochgefäßaufsatzes beeinflussbar ist, dessen zentrische Platzierung auf das Kochgefäß erleichtert werden kann und bestimmte Stellen markiert werden können.

Bei der Ausbildung des Kochgefäßaufsatzes nach dem Anspruch 10 ist eine besondere Formgebung gewählt. Folgt das Verschlussteil dieser Formgebung, so spricht dieses besonders leicht und feinfühlig auf die hochkochende Flüssigkeit an. Da der äußere Verschlussteilbereich nach einer Richtungsumkehr in den schräg nach außen und unten geneigten Randabschnitt übergeht, fängt sich die hochkochende Flüssigkeit am äußeren Verschlussteilbereich und wirkt auf einer großen Angriffsfläche und mit einem großen Hebelarm am Verschlussteil.

Der Kochgefäßaufsatz kann auch mit Metalleinsätzen oder -ringen versehen sein. Insbesondere wenn dieser aus Silikon gefertigt ist, wirkt sich dies auf sein Gewicht und seine Steifigkeit aus. Bevorzugt sind die Einsätze oder Ringe bei der von Silikon umschlossen. Weiter lassen sich zusätzliche Kräfte auf den Kochgefäßaufsatz ausüben, wenn ein Permanentmagnet in seine Nähe gebracht wird. Es können auch leicht magnetische Zusatzgewichte oder Griffe angesetzt werden. Falls letzteres nicht erwünscht ist, kann die Steifigkeit auch durch z. B. härtere Kunststoffeinsätze oder-ringe beeinflusst werden.

Ist der Kochgefäßaufsatz gemäß Anspruch 15 gänzlich aus Silikon, so ist er besonders flexibel und gut an jegliche Ränder von Kochgefäßen anpassbar. Er lässt sich sogar, insbesondere durch Aufsetzen eines Zusatzgewichtes bei Kochgefäßen mit Ausgießschnäbeln verwenden. Soll der Kochgefäßaufsatz für Kochgefäße mit sehr großen Innendurchmessern verwendet werden, z.B. 28 cm oder mehr, so empfiehlt es sich einen einfach gestalteten Adapterring zu verwenden. Auf die Herstellung und Vorhaltung verschiedener Größen des komplizierter gestalteten Kochgefäßaufsatzes kann damit verzichtet werden.

Nachfolgend wird ein Ausführungsbeispiel des Kochgefäßaufsatzes gemäß der Erfindung anhand der Zeichnung beschrieben. Es zeigt:
- Fig. 1:: ein nicht erfindungsgemäßes Beispiel eines Kochgefäßaufsatzes mit geöffneten Verschlussteilen auf einem Kochgefäß, wobei zur besseren Darstellung ein Viertel herausgeschnitten ist.
- Fig. 2:: einen Querschnitt durch ein Hälfte des Kochgefäßaufsatzes gemäß der Schnittführung B in Fig. 1.
- Fig. 3:: ein erfindungsgemäßes Beispiel einer Ausgestaltung eines Kochgefäßaufsatzes mit geöffneten Verschlussteilen auf einem Kochgefäß, wobei auch hier zur besseren Darstellung ein Viertel herausgeschnitten ist.

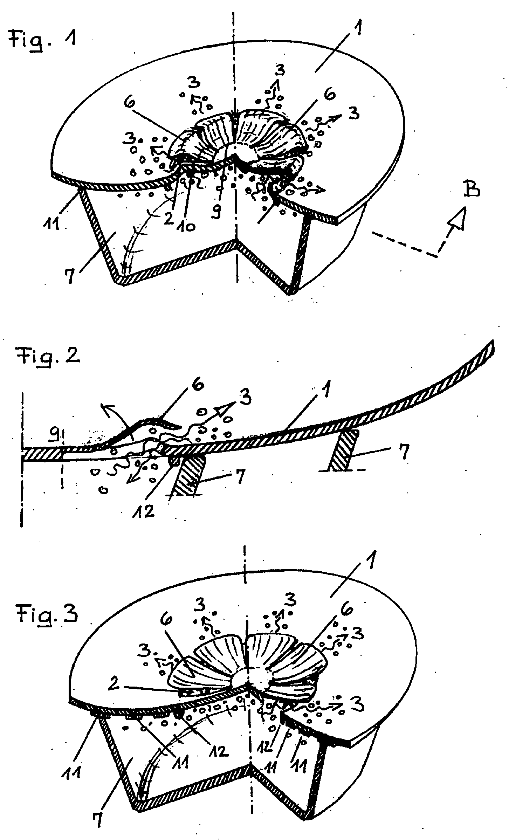

Der in Fig. 1 und 2 gezeigte, auf einem Kochtopf aufgelegte Kochgefäßaufsatz 1 ist vollständig aus Silikon gebildet und weist einen horizontalen, scheibenförmigen Zentralbereich auf, der von sechs Polygonseiten begrenzt ist. Daran schließen sich nach außen innerhalb eines Kreisringes gleichmäßig verteilt sechs Durchtrittsöffnungen (2) an, zwischen denen jeweils ein Verbindungssteg (10) vorhanden ist. Die Durchtrittsöffnungen (2) haben im Wesentlichen einen tortenstückähnlichen Grundriss mit einer abgeschnitten Spitze. Außerhalb dieser, die abgeschnittene Spitze bildenden Linie (9), die sich als regelmäßiges Sechseck an den genannten Zentralbereich anschließt, sind die Verschlussteile (6) nicht mehr mit dem Kochgefäßaufsatz verbunden und bilden somit einzelne Verschlussteile (6). Diese Sechseckseiten bilden damit jeweils eine Art Gelenkachse für die einzelnen Verschlussteile (6). Der genannte Kreisring, in dem die Durchtrittsöffnungen (2) angeordnet sind, verläuft im Querschnitt gesehen im Anschluss an den Zentralbereich zunächst noch horizontal, steigt anschließend an, bildet daran anschließend einen Kuppelring und fällt darauf hin wieder nach unten, wo er in den äußeren Bereich der Schalenform übergeht. Die Verschlussteile (6) haben im Wesentlichen die gleiche Gestalt wie die Durchtrittsöffnungen (2) bzw. der Kochgefäßaufsatz (1) im Bereich der Durchtrittsöffnungen (2) wobei diese jedoch leicht übergriffen werden und somit in der Ruhestellung auf den Verbindungsstegen (10) und dem radialen, äußeren Durchtrittsöffnungsrand aufliegen. Die einzelnen Verschlussteile (2) haben über den Verbindungsstegen (10) einen Abstand zueinander, womit ein störungsfreier Bewegungsablauf, der Durchtrittsöffnungen (2) gewährleistet ist. Das störungsfreie auf- und herabklappen der Verschlussteile (2) wird noch dadurch begünstigt, dass deren Dicke zu den freien Rändern hin abnimmt. Damit gleiten die Verschlussteile allenfalls übereinander und verspreizen sich nicht bei ihrer Klappbewegung.

In diesem Falle ist ein Bauteil gefertigt, das aus dem polygonaler Zentralbereich mit daran anschließenden, wie voran beschrieben geformten, blütenblätterähnlichen Verschlussteilen (6). Dieses Bauteil ist auf den polygonalen Zentralbereich des Kochgefäßaufsatzes aufgesetzt und mit diesem so verbunden, dass ein einstückiges Gesamtbauteil entsteht.

In Figuren sind die Verschlussteile (6) in der geöffneten Position gezeigt. Die Schnittführung des in Figur 1 und 3 zur besseren Darstellung herausgeschnittene Viertels ist so gewählt, dass der linke Viertelrand durch einen Verbindungssteg (10) geführt ist und der rechte Viertelrand zwischen zwei Verbindungsstegen (10) verläuft.

In der geöffneten Position haben sich die Verschlussteile (6) durch die nach oben aufkochende Flüssigkeit (3) entgegen ihres Öffnungsbewegungswiderstandes aufgestellt, wobei der Offnungsbewegungswiderstand hauptsächlich aus der Eigengewichtskomponente und allenfalls geringfügig aus dem Verformungswiderstand des Verschlussteils (2) im Bereich der die Gelenkachse bildenden Verbindungslinie (9) resultiert.

Sofort beim Auftreffen der hochkochenden bzw. aufschäumenden Flüssigkeit (3) auf das Verschlussteil (2), klappt dieses nach oben und gibt der hochkochenden Flüssigkeit (3) den Weg in die Auffangschale frei. Dieser Kochvorgang kann sehr turbulent verlaufen, wobei das Verschlussteil (2) sensibel auf jeden unterschiedlichen Öffnungsdruck der Flüssigkeit so reagiert, dass der Öffnungsquerschnitt zwischen der Durchtrittsöffnung und der Schale gerade so weit wie nötig geöffnet wird. Damit ist wieder sichergestellt, dass keine unnötige Energie verbraucht wird und dass unter der wechselnden Hin- und Herbewegung des als Klappe wirkenden Verschlussteils (6) die Oberflächenspannung oder gar Hautbildung der hochgekochten Flüssigkeit vermindert wird.

Unterhalb der durch die Durchtrittsöffnungen (2) strömenden Flüssigkeit erfolgt ein Rückfluss der in der Schale abgekühlten Flüssigkeit. Ein Überkochen wird dabei auch bei anhaltendem Kochvorgang unterbunden.

Die grundsätzliche Öffnungsstellung der Verschlussteile (6) bleibt solange erhalten solange von der Kochstelle genügend Energie zugeführt wird. Wird die Energiezufuhr abgestellt, bewegen sich die Verschlussteile (6) wieder in ihre Ruhestellung. Wird die Energiezufuhr wieder erhöht, wird der Öffnungsvorgang wieder eingeleitet. Dieses Wechselspiel, könnte sich laufend wiederholen ohne dass ein Überkochen aus dem Kochgefäßaufsatz zu befürchten ist.

Bei dem Kochgefäßaufsatz (1) nach Fig. 3 ist die Schale aus einem Hartmaterial, beispielsweise Glas oder Aluminium hergestellt. Er könnte grundsätzlich, wie in Fig. 1 gezeigt, ebenso aus Silikon gebildet sein. Der Kochgefäßaufsatz (1) hat von seinem Zentrum bis zum Rand eine einfach herstellbare, gleichmäßige Schalenform.

Wie bei der Ausführung nach Fig. 1 sind auch bei diesem Ausführungsbeispiel sechs Durchtrittsöffnungen (2) gleichmäßig verteilt angeordnet. Sie haben im Wesentlichen einen tortenstückähnlichen Grundriss mit abgekanteter Spitze, sind unter Bildung von Verbindungsstegen (10) beabstandet zueinander und liegen zwischen einem Kreisring von weniger als 14 cm und einem Zentralbereich des Kochgefäßaufsatzes (1). Diesen Durchtrittsöffnungen ist ein dünnwandiges tellerartiges Verschlussteil (6) mit ebenfalls einem Zentralbereich und daran anschließenden Einzelverschlussteilen (6) zugeordnet, womit ein blütenähnliches Gebilde entsteht. Die Wandung des tellerartigen Verschlussteils (6) ist in seiner Ruhestellung der gleichmäßigen Schalenform angepasst und liegt auf der Schalenform auf. Der Zentralbereich des tellerartigen Verschlussteils (6) kann kleiner, gleich oder grösser als der Zentralbereich der Schale sein. Im dargestellten Beispiel sind beide Zentralbereiche gleich und kreisförmig ausgebildet, wobei dieser Kreis die Verbindungslinien (9) bildet. Beide Zentralbereiche sind vollflächig so miteinander verbunden dass der Kochgefäßaufsatz einstückig ist.

Gemäß einer Ausführungsform der vorliegenden Erfindung ist in der in Fig. 3 gezeigten Ausgestaltung ein Verschlussteller vorgesehen, der im Grundriss die Durchtrittsöffnungen übergreift und dessen Kreisrand im Ruhezustand auf der Schalenform aufliegt und somit innerhalb dieser Auflagefläche beliebig gestaltet sein kann, wobei seine Öffnungsstellung dadurch erreicht wird, dass sich der Verschlusstellerrand von der Schalenform abhebt und dabei den Flüssigkeitsdurchfluss vorzugsweise für mehrere oder alle Durchtrittsöffnungen freigibt. Dieses Anheben wird dadurch erreicht, dass der Verschlussteller vertikalbeweglich mit dem Kochgefäßaufsatz verbunden ist und der gesamte Verschlussteller geführt angehoben wird. Um den Flüssigkeitsaustritt zwischen dem Kochgefäß (7) und dem Kochgefäßaufsatz (1) entlang der Kontaktflächen (11) zuverlässig zu verhindern sind bei dem Beispiel nach Fig. 3 an der Unterseite der Schalenform elastische Silikonringbereiche mit den Durchmessern vorgesehen, die den üblichen Kochgefäßdurchmessern entsprechen. Neben dem innersten Silikonringbereich sind an der Schalenunterseite noch Noppen vorgesehen, die ein zentrisches Platzieren des Kochgefäßaufsatzes auf dem Kochgefäß ermöglichen.

Der Kochvorgang, das Erreichen der Öffnungsbewegung des Verschlussteiles und sein Zurückbewegen in den Ruhezustand erfolgt analog den zu Fig. 1 und 2 beschriebenen Abläufen.

Wie bereits erwähnt, kann der Kochvorgang sehr turbulent ablaufen. Nicht nur in diesem Falle verhindert der Kochgefäßaufsatz auch ein zu starkes Spritzen und damit eine daraus resultierende Kochstellenverschmutzung. Natürlich kann der Kochgefäßaufsatz ohne weiteres auch als Abdeckung bzw. Deckel für nicht zum Überkochen neigendem Koch- oder Bratgut und/oder für jede Art von Koch- oder Bratgeschirr verwendet werden.

## Patentansprüche

1. Kochgefäßaufsatz (1) zum Verhüten des Überkochens von Flüssigkeiten, insbesondere von beim Kochen aufschäumenden Flüssigkeiten mit hohem Eiweiß- oder Stärkeanteil wie Milch, Kochwasser von Kartoffeln oder Nudeln od. dgl., der entweder eine zentrale oder mehrere Durchtrittsöffnung(en) (2) für die Flüssigkeit aufweist, wobei der Durchtrittsöffnung (2) bzw. den Durchtrittsöffnungen ein einziges flächiges Verschlussteil (6) zugeordnet ist, das in dem nicht durch die hochkochende bzw. hochschäumende Flüssigkeit in Kontakt stehenden Ruhezustand die ihm zugeordnete Durchtrittsöffnung (2) bzw. die ihm zugeordneten Durchtrittsöffnungen (2) im Wesentlichen verschließt und durch die Beaufschlagung mit der beim Kontakt mit der hochkochenden bzw. hochschäumenden Flüssigkeit (3) entstehenden Öffnungskraft in eine Öffnungsstellung bewegbar ist, in der die Durchtrittsöffnung (2) bzw. Durchtrittsöffnungen (2) zumindest teilweise freigegeben sind, und so gestaltet und mit dem Kochgefäßaufsatz (1) verbunden ist, dass es der Öffnungsbewegung einen geringen Widerstand entgegensetzt, wobei der Kochgefäßaufsatz (1) auf Kochgefäße mit unterschiedlichen Durchmessern aufsetzbar ist, zumindest die Kontaktflächen (11) des Kochgefäßaufsatzes (1) zu den unterschiedlichen Kochgefäßen (7) aus einem elastischen Material, insbesondere aus Silikon, gebildet sind, und das Verschlussteil (6) tellerartig ausgebildet ist,
wobei der Kochgefäßaufsatz (1) schalenförmig ausgebildet ist, sodass die hochkochende Flüssigkeit durch die geöffnete Druchtrittsöffnung (2) bzw. durch die geöffneten Druchtrittsöffnungen (2) in die Schale gelangen kann und von dort durch die geöffnete Durchtrittsöffnung (2) bzw. die geöffneten Durchtrittsöffnungen (2) wieder in das Kochgefäß (7) zurücklaufen kann, und die Öffnungsstellung durch Abheben des Verschlussrands von der Schalenform erreicht wird,
**dadurch gekennzeichnet, dass**
das flächige Verschlussteil (6) mit dem Kochgefäßaufsatz (1) so verbunden ist, dass es eine geführte Bewegung zwischen der Öffnungsstellung und der Ruhestellung ausführen kann, und das Anheben des Verschlusstellerrands durch ein Anheben des gesamten Verschlusstellers erfolgt, der vertikalbeweglich mit dem Kochgefäßaufsatz (1) verbunden ist.

2. Kochgefäßaufsatz (1) nach Anspruch 1, **dadurch gekennzeichnet, dass** das tellerartige Verschlussteil zentral mit dem Kochgefäßaufsatz (1) verbunden ist und bevorzugt in einzelne blütenblätterähnliche Einzelverschlussteile aufgefächert ist.

3. Kochgefäßaufsatz (1) nach einem der vorhergehenden Ansprüche, **dadurch gekennzeichnet, dass** das Verschlussteil als kreisscheibenförmiger Verschlussteller ausgestaltet ist, der im Grundriss die Durchtrittsöffnungen (2) übergreift, und dessen Kreisrand im Ruhezustand auf der Schalenform des Kochgefäßaufsatzes (1) aufliegt.

4. Kochgefäßaufsatz (1) nach einem der vorhergehenden Ansprüche, **dadurch gekennzeichnet, dass** mehrere Durchtrittsöffnungen (2) in einem Kreisringbereich zwischen einem Zentralbereich und Außenringbereich des Kochgefäßaufsatzes (1) vorgesehen sind, und/oder das Verschlussteil bei abgestellter Energiezufuhr von einer Kochstelle in den Ruhezustand bewegbar ist.

5. Kochgefäßaufsatz (1) nach Anspruch 4, **dadurch gekennzeichnet, dass** mehrere Durchtrittsöffnungen (2) im Grundriss gesehen zentralsymmetrisch angeordnet und im Wesentlichen kreissektorförmig ausgebildet sind, wobei deren zentrumsfernen Ecken an den Kreissegmenten und/oder deren zentrumsnahen Ecken abgerundet oder abgeschnitten sind, und dass zwischen den Radialseiten der Durchtrittsöffnungen (2) radiale Verbindungsstege (8) des Kochgefäßaufsatzes (1) angeordnet sind, die sich von dessen Zentralbereich zum zentrumsfernen Außenringbereich erstrecken.

6. Kochgefäßaufsatz (1) nach einem der vorhergehenden Ansprüche, **dadurch gekennzeichnet, dass** zumindest die Berührungsränder des Verschlussteils (6) mit dem Kochgefäßaufsatz (1) der dortigen Formgebung des Kochgefäßaufsatzes (1) im Wesentlichen entsprechen und/oder das Verschlussteil (6) die Durchtrittsöffnung(en) (2) überlappt oder überdeckt.

7. Kochgefäßaufsatz (1) nach einem der vorhergehenden Ansprüche, **dadurch gekennzeichnet, dass** das Verschlussteil (2) zumindest bereichsweise aus einem elastischen Material, insbesondere Silikon, gebildet ist.

8. Kochgefäßaufsatz (1) nach einem der vorhergehenden Ansprüche, **dadurch gekennzeichnet, dass** das Verschlussteil (6) eine geringe Dicke und/oder ein geringes Gewicht aufweist.

9. Kochgefäßaufsatz (1) nach einem der vorhergehenden Ansprüche, **dadurch gekennzeichnet, dass** das Verschlussteil (6) mit Rippen und/oder Kerben versehen ist und/oder die Dicke des Verschlussteils (6) bevorzugt zu seinen freien, nicht mit dem Kochgefäßaufsatz (1) verbundenen Rändern hin abnimmt und/oder das Verschlussteil (6) eine Anlagefläche aufweist, die am Ende der Bewegung von der Öffnungsstellung in die Ruhestellung mit einer am Rand der Durchtrittsöffnung (2) ausgebildeten weiteren Anlagefläche, vorzugsweise einer in seine Bewegungsbahn hineinreichende Schrägfläche oder Anschlagnoppe, in Wirkverbindung gelangt und damit nur eine Öffnungsrichtung erlaubt.

10. Kochgefäßaufsatz (1) nach einem der vorhergehenden Ansprüche, **dadurch gekennzeichnet, dass** er im Querschnitt und von innen nach außen gesehen einen im Wesentlichen horizontal verlaufenden Zentralbereich, dann einen Ringabschnitt mit ansteigender Neigung, dann einen Kuppelabschnitt, dann einen nach unten abfallenden Ringabschnitt und dann wieder einen zweiten, nach oben ansteigenden Ringabschnitt bis zum Kochgefäßaufsatzrand aufweist, wobei die Durchtrittsöffnungen (2) vom inneren Zentralbereich bis zum äußeren Bereich des nach unten abfallenden Ringabschnittes oder bis zum inneren Bereich des zweiten ansteigenden Ringabschnittes reichen.

11. Kochgefäßaufsatz (1) nach einem der vorhergehenden Ansprüche, **dadurch gekennzeichnet, dass** er gänzlich aus Silikon gebildet ist und/oder mit Rippen und/oder Kerben und/oder Noppen (12) versehen ist und/oder Metalleinsätze oder -ringe, welche bevorzugt von Silikon umschlossen sind, und/oder Kunststoffeinsätze oder -ringe aufweist.

## Claims

1. Cooking vessel attachment (1) for preventing boiling over of liquids, in particular of liquids which foam during cooking having a high protein or starch content, such as milk, cooking water of potatoes or noodles or the like, which has either one central or several passage opening(s) (2) for the liquid, wherein one single two-dimensional closure part (6), which in the rest state not in contact due to the boiling or foaming liquid essentially closes the passage opening (2) assigned to it or the passage openings (2) assigned to it, is assigned to the passage opening (2) or the passage openings, and due to exposure to the opening force being produced during contact with the boiling or foaming liquid (3) can be moved to an open position in which the passage opening (2) or the passage openings (2) are at least partly released, and is designed and connected to the cooking vessel attachment (1) so that it sets a slight resistance to the opening movement, wherein the cooking vessel attachment (1) can be placed on cooking vessels having different diameters, at least the contact surfaces (11) of the cooking vessel attachment (1) with the different cooking vessels (7) are formed from a resilient material, in particular from silicone, and the closure part (6) is designed like a plate, wherein the cooking vessel attachment (1) is designed like a bowl so that the boiling liquid may pass into the bowl through the opened passage opening (2) or through the opened passage openings (2) and from there may return again to the cooking vessel (7) through the opened passage opening (2) or the opened passage openings (2), and the open position is achieved by lifting the closure edge from the bowl shape, **characterised in that** the two-dimensional closure part (6) is connected to the cooking vessel attachment (1) so that it may execute a guided movement between the open position and the rest position, and the raising of the closure plate edge is effected by raising the entire closure plate which is connected to the cooking vessel attachment (1) to be vertically movable.

2. Cooking vessel attachment (1) according to claim 1, **characterised in that** the platelike closure part is connected centrally to the cooking vessel attachment (1) and is fanned out preferably into separate individual closure parts similar to petals.

3. Cooking vessel attachment (1) according to one of the preceding claims, **characterised in that** the closure part is designed as a circular closure plate which engages over the passage openings (2) in outline, and its circle edge rests in the rest state on the bowl shape of the cooking vessel attachment (1).

4. Cooking vessel attachment (1) according to one of the preceding claims, **characterised in that** several passage openings (2) are provided in a circular ring region between a central region and outer ring region of the cooking vessel attachment (1), and/or the closure part can be moved from a cooking hob to the rest state when the energy supply is stopped.

5. Cooking vessel attachment (1) according to claim 4, **characterised in that** several passage openings (2) are arranged to be centrally symmetrical, seen in outline, and designed to be essentially like a circle sector, wherein the corners thereof which are remote from the centre are rounded off or cut off at the segments of the circle and/or the corners thereof which are close to the centre, and **in that** radial connecting bars (8) of the cooking vessel attachment (1), which extend from its central region to the outer ring region remote from the centre, are arranged between the radial sides of the passage openings (2).

6. Cooking vessel attachment (1) according to one of the preceding claims, **characterised in that** at least the contact edges of the closure part (6) with the cooking vessel attachment (1) essentially correspond to the design there of the cooking vessel attachment (1) and/or the closure part (6) overlaps or covers the passage opening(s) (2).

7. Cooking vessel attachment (1) according to one of preceding claims, **characterised in that** the closure part (2) is formed at least in some regions of a resilient material, in particular silicone.

8. Cooking vessel attachment (1) according to one of the preceding claims, **characterised in that** the closure part (6) has a low thickness and/or a low weight.

9. Cooking vessel attachment (1) according to one of the preceding claims, **characterised in that** the closure part (6) is provided with ribs and/or notches and/or the thickness of the closure part (6) decreases preferably towards its free edges not connected to the cooking vessel attachment (1) and/or the closure part (6) has a contact surface which at the end of the movement from the open position to the rest position comes into operative connection with a further contact surface formed at the edge of the passage opening (2), preferably an inclined surface or stop knob extending into its movement path, and hence permits only one direction of opening.

10. Cooking vessel attachment (1) according to one of the preceding claims, **characterised in that**, seen in cross-section and from the inside out, it has an essentially horizontally running central region, then a ring section with rising incline, then a dome section, then a downwardly dropping ring section and then again a second, upwardly rising ring section as far as the edge of the cooking vessel attachment, wherein the passage openings (2) extend from the inner central region to the outer region of the downwardly dropping ring section or to the inner region of the second rising ring section.

11. Cooking vessel attachment (1) according to one of the preceding claims, **characterised in that** it is formed completely from silicone and/or is provided with ribs and/or notches and/or knobs (12) and/or has metal inserts or metal rings which are preferably surrounded by silicone, and/or plastic inserts or plastic rings.

## Revendications

1. Couvercle de récipient de cuisson (1) pour éviter le débordement de liquides, en particulier de liquides moussant lors de la cuisson, avec une part élevée de blanc d'oeuf ou d'amidon tels que du lait, de l'eau de cuisson de pommes de terre ou de pâtes ou similaires, lequel couvercle présente soit une ouverture de passage (2) centrale soit plusieurs ouvertures de passage (2) pour le liquide, dans lequel une unique partie de fermeture plane (6) est associée à l'ouverture de passage (2) ou aux ouvertures de passage (2), laquelle ferme sensiblement l'ouverture de passage (2) qui lui est associée ou les ouvertures de passage (2) qui lui sont associées à l'état de repos dans lequel elle n'est pas en contact avec le liquide en ébullition ou qui mousse beaucoup, et peut être déplacée par la sollicitation de la force d'ouverture apparaissant lors du contact avec le liquide en ébullition ou qui mousse beaucoup (3) dans une position d'ouverture, dans laquelle l'ouverture de passage (2) ou les ouvertures de passage (2) sont libérées au moins en partie, et qui est conçue et est reliée au couvercle de récipient de cuisson (1) de telle sorte que la partie de fermeture plane oppose une faible résistance au mouvement d'ouverture, dans lequel le couvercle de récipient de cuisson (1) peut être placé sur des récipients de cuisson de différents diamètres, au moins les surfaces de contact (11) du couvercle de récipient de cuisson (1) avec les différents récipients de cuisson (7) sont constituées d'un matériau élastique, en particulier de silicone, et la partie de fermeture plane (6) est réalisée à la manière d'une plaque,
dans lequel le couvercle de récipient de cuisson (1) est réalisé de manière à présenter une forme de cuvette de sorte que le liquide en ébullition parvient par l'ouverture de passage (2) ouverte ou par les ouvertures de passage (2) ouvertes dans la cuvette et peut revenir de nouveau, par l'ouverture de passage (2) ouverte ou par les ouvertures de passage (2) ouvertes, dans le récipient de cuisson (7) et dans lequel la position d'ouverture est obtenue en retirant le bord de fermeture de la forme de cuvette,
**caractérisé en ce**
**que** la partie de fermeture (6) plane est reliée au couvercle de récipient de cuisson (1) de telle sorte qu'elle peut exécuter un mouvement guidé entre la position de l'ouverture et la position de repos, et en ce que le relèvement du bord de plateau de fermeture est effectué par un relèvement de l'ensemble du plateau de fermeture, qui est relié de manière mobile verticalement au couvercle de récipient de cuisson (1).

2. Couvercle de récipient de cuisson (1) selon la revendication 1, **caractérisé en ce que** la partie de fermeture de type plateau est reliée de manière centrale au couvercle de récipient de cuisson (1) et est compartimentée de manière préférée en diverses parties de fermeture isolées similaires à des pétales.

3. Couvercle de récipient de cuisson (1) selon l'une quelconque des revendications précédentes, **caractérisé en ce que** la partie de fermeture est configurée sous la forme d'un plateau de fermeture présentant la forme d'un disque circulaire, qui, vu en projection horizontale, recouvre les ouvertures de passage (2) et dont le bord circulaire repose, dans l'état de repos, sur la forme de cuvette du couvercle de récipient de cuisson (1).

4. Couvercle de récipient de cuisson (1) selon l'une quelconque des revendications précédentes, **caractérisé en ce que** plusieurs ouvertures de passage (2) sont prévues dans une zone annulaire entre une zone centrale et zone annulaire extérieure du couvercle de récipient de cuisson (1), et/ou **en ce que** la partie de fermeture peut être déplacée, lorsque l'alimentation en énergie est arrêtée, depuis une zone de cuisson dans l'état de repos.

5. Couvercle de récipient de cuisson (1) selon la revendication 4, **caractérisé en ce que** plusieurs ouvertures de passage (2) sont disposées de manière symétrique et centrale vu en projection horizontale et sont réalisées sensiblement en forme de secteur de cercle, leurs coins éloignés du centre sur les segments de cercle et/ou leurs coins proches du centre étant arrondis ou découpés, et **en ce que** des nervures de liaison (8) radiales du couvercle de récipient de cuisson (1) sont disposées entre les côtés radiaux des ouvertures de passage (2), lesquelles s'étendent de sa zone centrale à la zone annulaire extérieure éloignée du centre.

6. Couvercle de récipient de cuisson (1) selon l'une quelconque des revendications précédentes, **caractérisé en ce qu'**au moins les bords de contact de la partie de fermeture (6) avec le couvercle de récipient de cuisson (1) correspondent sensiblement à la forme qui s'y trouve du couvercle de récipient de cuisson (1), et/ou **en ce que** la partie de fermeture (6) chevauche ou recouvre la/les ouverture(s) de passage associée(s) (2).

7. Couvercle de récipient de cuisson (1) selon l'une quelconque des revendications précédentes, **caractérisé en ce que** la partie de fermeture (2) est constituée au moins par portions d'un matériau élastique, en particulier de silicone.

8. Couvercle de récipient de cuisson (1) selon l'une quelconque des revendications précédentes, **caractérisé en ce que** la partie de fermeture (6) présente une faible épaisseur et/ou un faible poids.

9. Couvercle de récipient de cuisson (1) selon l'une quelconque des revendications précédentes, **caractérisé en ce que** la partie de fermeture (6) est pourvue de nervures et/ou d'encoches, et/ou **en ce que** l'épaisseur de la partie de fermeture (6) diminue de préférence vers ses bords libres non reliés au couvercle de récipient de cuisson (1), et/ou **en ce que** la partie de fermeture (6) présente une surface d'appui qui parvient en liaison active à la fin du mouvement de la position d'ouverture à la position de repos avec une autre surface d'appui réalisée sur le bord de l'ouverture de passage (2), de préférence une surface oblique ou un nope de butée s'engageant dans sa trajectoire, et permet ainsi un seul sens d'ouverture.

10. Couvercle de récipient de cuisson (1) selon l'une quelconque des revendications précédentes, **caractérisé en ce qu'**il présente, vu en coupe et de l'intérieur vers l'extérieur, une zone centrale s'étendant sensiblement horizontalement, une portion annulaire avec une pente croissante, une portion de coupole, une portion annulaire s'inclinant vers le bas et de nouveau une seconde portion annulaire croissante vers le haut jusqu'au bord de couvercle de récipient de cuisson, les ouvertures de passage (2) s'étendant de la zone centrale intérieure jusqu'à la zone extérieure de la portion annulaire s'inclinant vers le bas ou jusqu'à la zone intérieure de la seconde portion annulaire croissante.

11. Couvercle de récipient de cuisson (1) selon l'une quelconque des revendications précédentes, **caractérisé en ce qu'**il est constitué entièrement de silicone et/ou est pourvu de nervures et/ou d'encoches et/ou de nopes (12) et/ou présente des inserts ou des anneaux en métal, qui sont de préférence entourés de silicone, et/ou des inserts ou des anneaux en plastique.
